# EUROPEAN PATENT APPLICATION

(11) **EP 2 453 290 A1**
(43) Date of publication of application: **16.05.2012**
(21) Application number: 10275115.3
(22) Date of filing: 11.11.2010
(51) Int. Cl.: G02B 27/00, G02B 27/01, G06F 3/01

(54) **Image presentation method and apparatus therefor**

(71) Applicant: BAE Systems PLC, London SW1Y 5AD (GB)
(72) Inventor: The designation of the inventor has not yet been filed

(57) **Abstract**

A method of presenting an image to a user of a head-mounted display comprising sensing when the user of the display looks in a predetermined direction away from his primary field of view, and presenting the image to the user via the display in response to said sensing at a virtual location spaced apart from the primary field of view.
The invention is particularly applicable for displaying information to persons in a working environment where there is insufficient space to accommodate display screens.

## Description

This invention relates to a method of presenting an image to a user of a head-mounted display, and to a system for implementing the method.

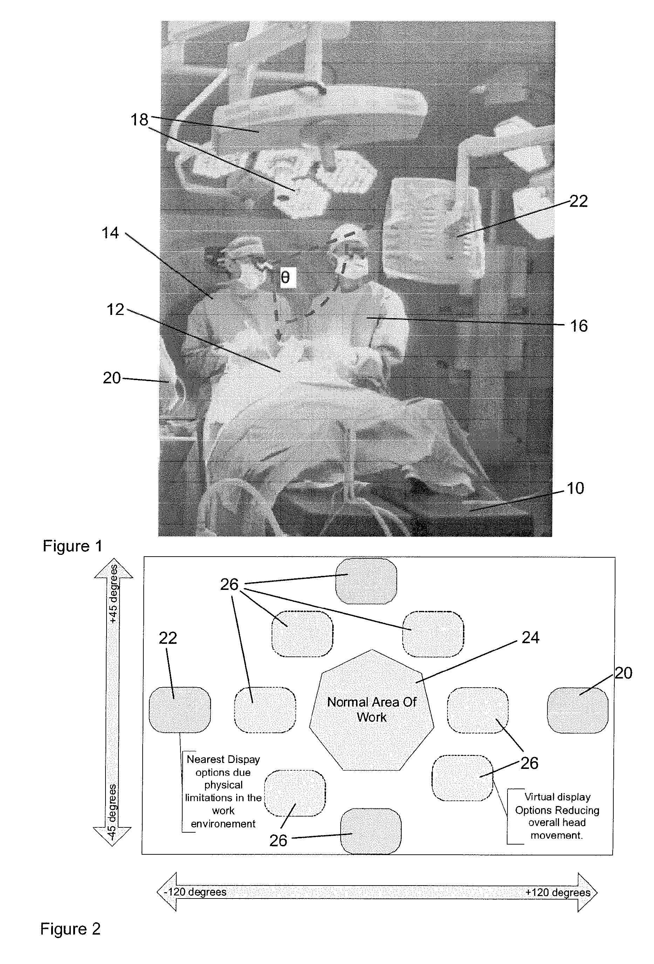

Many working environments have primary areas of interest around which persons working together on a task are grouped. Examples are a team of technicians working together on a piece of equipment and, especially, a team of surgeons and other medical professionals operating on a patient. Typically the team is provided with information from external sources via monitor screens dispersed around the working environment at locations where space is available. This may not be ergonomically efficient or convenient for the operator; Figure 1 (discussed hereafter) for example shows a surgeon being obliged to turn away from his operation site to look at a monitor some distance and angular displacement away.

Another example is that of a technician who is servicing installed equipment in situ in a confined space. Then it may not be possible to deploy a full-size monitor such as that of Figure 1, and the technician has to make do with a much smaller (e.g. pocket-size) monitor screen.

The present invention seeks to provide a display method and system which can present images to a user without the need for monitor screens.

In a first aspect the invention provides a method of presenting an image to a user of a head-mounted display comprising sensing when the user of the display looks in a predetermined direction away from his primary field of view (as herein defined), and presenting the image to the user via the display in response to said sensing at a location spaced apart from the primary field of view.

By "primary field of view" we mean the region in space towards which the user normally looks in a working environment when employing the method, that is to say, his principal area of interest in his total field of view. Generally this will be the area directly in front of him. Preferably the primary field of view is a real-world view.

Preferably the image is presented as if it is at a fixed spatial position.

The sensing step may comprise sensing movements of the user's head, for example, by means of at least one camera.

The method may comprise using the display also to overlay a virtual image of an object on to image of said object in the user's primary field of view.

The user may share a common primary field of view with at least one other user of another said head-mounted display, the method comprising presenting a different said image to the other user, the different image being presented as if it were at a fixed spatial position which is different to the fixed spatial position of the first said image.

Of course, each user may alternatively or in addition be presented with a common image. Preferably, that image is presented to all users as if it is at a fixed position in real-world space relative to the primary field of view.

In a second aspect the invention provides a display system comprising a head-mounted display, means configured for sensing when a user of the display looks in a predetermined direction away from his primary field of view (as herein defined) and means responsive to the sensing means and configured for presenting an image to the user via the head-mounted display when the user looks in said direction, at a location spaced apart from the primary field of view.

The presenting means may be configured to present the image as if it were at a fixed spatial position.

In a third aspect, the invention provides a display system comprising a head-mounted display which when worn by a user affords the user a view of the real world as a primary field of view (as herein defined), and means for presenting to the user via the head-mounted display an image which appears to the user to be spaced apart from the primary field of view in a fixed position relative thereto in real-world space.

The system of the third aspect may comprise means configured for sensing when the user of the display looks in a predetermined direction away from his primary field of view, the presenting means being responsive to the sensing means and configured for presenting the image to the user via the head-mounted display when the user looks in said direction.

The sensing means may comprise means for sensing movements of the users' head.

The sensing means may comprise at least one camera directable at the users' head.

The presenting means may be configured also to present a virtual image of an object overlaid or an image of that object in the user's primary field of view.

There may be a plurality of said head-mounted displays, the sensing means being configured to determine when users of the displays look in respective predetermined directions, the presenting means being configured to present respective images to the user of the displays when they look in said respective directions.

The presenting means may be configured to present said respective images to said plurality of users as if the images were at respective different fixed spatial positions around a primary field of view common to said users.

Alternatively or in addition the presenting means may be configured to present each user with a common said image. Preferably, the presenting means is configured to present that image so that it appears to all users to be at the same fixed position in real-world space relative to the primary field of view.

An embodiment of the invention will now be described, merely by way of example with reference to the accompanying drawings, wherein
Figure 1 shows a known image display system;
Figure 2 illustrates an application of the invention;
Figure 3 shows a system according to the invention;
Figure 4 illustrates the operation of the system of figure 3; and
Figure 5 illustrates the operation of a further feature of the system.

Figure 1 shows a typical known working environment in a hospital operating theatre. A patient on an operating table 10 is undergoing surgery at an operating site 12, attended by two surgeons 14, 16 and other medical staff (not shown).

Surrounding the working environment are various lights 18 and monitors 20, 22. These are substantial pieces of equipment and only limited numbers of them can be accommodated in the space available, and not necessarily at the optimum locations for the surgeon to use. Thus, surgeon 14 is turning away from the operation site to look at the monitor 22 which is disposed some distance away and at an angle of more than 90^{⊚} to his normal direction of gaze towards the operation site.

The here-described exemplary embodiment of the invention seeks to avoid or reduce the problem of accommodating display screens around a work site. This is achieved by providing the worker who requires the information normally provided on such screens with a head-mounted display in which the required display image is provided when the user looks in a particular direction away from his primary field of view i.e. his normal area of work.

Figure 2 illustrates what may be achieved. A user has a primary real-world field of view of his normal area of work 24. Conventionally, additional information, such as the patient's heart rate, blood pressure and respiration rate, and MRI or other images, are displayed on the monitor screens 20, 22 which are here shown as displaced about 120° from the users' primary field of view. Instead we utilise a head mounted display (HMD) to provide an image (or a plurality of images) to the user as if the image or images are at one or more virtual image screens or sites 26 dispersed around and much closer to his primary field of view, for example, within ± about 60° in azimuth and ±45° in elevation.

To view an image, the user moves his head slightly to look towards the fixed position in space at which the virtual image is located. This movement causes the system to present the image to the user on the head-mounted display. If the field of view of the HMD optics is large compared to the primary field of view, the image may be present in the user's peripheral vision when he is looking at his primary field of view. He then can glance at the image by just using eye movement, but this is tiring if done for any significant time, and the user will in practice move his head to bring the image more centrally into his field of view. If the image is totally out of the user's peripheral vision when looking at the primary field of view, the HMD may provide a small marker in his peripheral vision indicating the direction in which the user should look to see the image.

The HMD images are disposed at fixed positions in virtual space, e.g. as if on a wall of the room in which the user is standing. Thus the virtual images remain in the same spatial location relative to the work site if the user moves around in the working environment, in the same way as an image or a physical display screen would remain fixed in space.

The arrangement thus differs from know "picture-in-picture" (PIP) displays in which a virtual image is inset within another virtual image. In such a display the inset image is fixed relative to the frame of the other image (which is always also a virtual image) rather than fixed in space.

The inset PIP image must be kept small in order to be confined to a corner of the main image, so as not to obscure important parts of it. In the presently-described embodiment of the invention the virtual image is not superimposed in or inset into the main field of view image, but is spaced from it, and comes into the user's view when he moves his gaze. It thus may be positioned centrally in his view by the HMD when he is looking towards it.

Although the image in the user's primary field of view will generally be a direct real-world view of his normal area of work, that view can be provided electronically as a virtual image, for example one produced by an endoscopic camera if the surgeon is operating by a minimally-invasive technique.

The primary field of view image may be a combined real-world and virtual image, for example a wire frame image derived from MRI data and superimposed exactly on the real-world image to provide an enhanced display, by using known conformal symbology techniques.

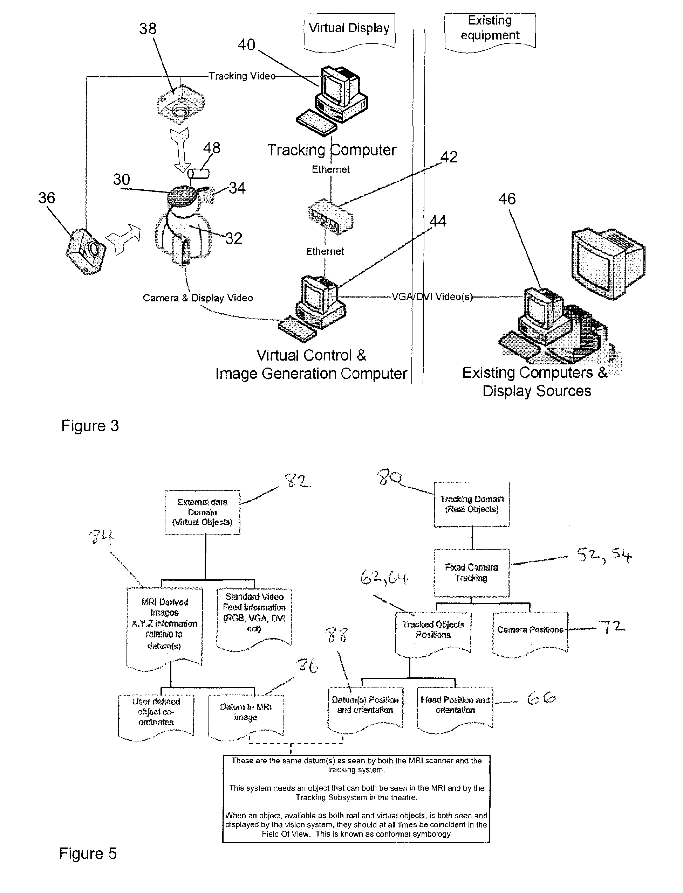

Referring to figure 3, the system comprises a HMD 30 worn by the user 32. The HMD is known per se, and projects an image onto a screen 34 in front of one of the user's eyes. The screen is transparent so that the user can view the real world through it. If preferred, the screen can be in the form of a transparent visor so that the image can be positioned to be presented to both eyes of the user.

The HMD can be mounted directly on to the user's head e.g. by a simple webbing cradle, or it can be embodied in or on a helmet for example if head protection is required in an industrial or otherwise hazardous environment. However the HMD is configured, it bears conspicuous patterns so that movements of the user's head can be tracked by one or more tracking video cameras 36, 38. In some circumstances one camera may be sufficient, but two or three are preferred so that inaccuracies or ambiguities in the tracked position and orientation of the user's head can be more easily resolved.

The video outputs of the cameras 36, 38 are supplied to a tracking computer 40 which is programmed to determine from the tracked head movements the spatial position of the user's head, and which direction the user is looking.

This information is communicated via an Ethernet or other LAN 42 to a virtual image generation computer 44. This computer is configured to provide one or more virtual images to the HMD 30 as contemplated with reference to figure 2, and to display the appropriate image when the tracking computer has determined that the user is looking towards the relevant site 26. The computers 42, 44 can of course be replaced by a single unit with suitable parallel-processing capability.

In the surgical environment, the images supplied to the HMD are those conventionally displayed on operating theatre screens, e.g. the patient's vital signs and images from one or more medical imaging sources, either real-time or historic. These are supplied to the computer 44 from the theatre's existing computers and display source 46 in conventional video format (e.g. RGB, VGA, PAL etc) or as images and vectors for processable images such as MRI.

As mentioned, if there is more than one user 32 attending the same area of work, each may have his own HMD, and have his head position and orientation separately monitored. Each may then be provided with his own set of images at sites 26, or each may have access to the same set of images. It will be appreciated that because the two (or more) users are at different positions around the work site, they respectively will look in different directions to see the same image 26, because it is at a fixed position in virtual space.

The HMD 30 may usefully be provided with a video camera 48 aligned to view the area of the work site at which the user is looking. The camera can then be utilised to zoom in and provide the user with an enlarged view of the most relevant part of his area of work. Alternatively, or in addition this view may be made available to other users, so that (for example) a lead surgeon is provided with a view of the operation site as seen by his assistant.

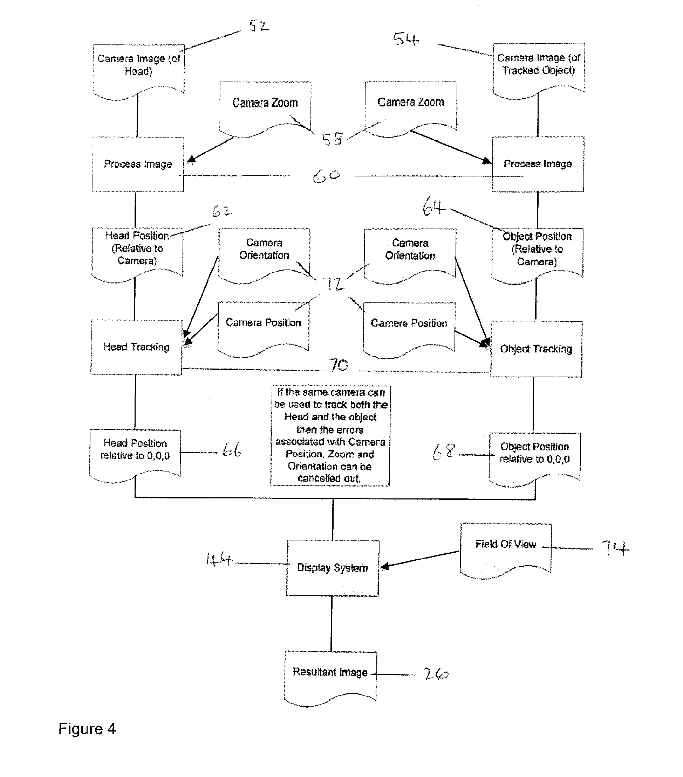

Figure 4 shows the operation of a tracking camera 36 or 38 in more detail. The camera produces an image containing the markers 52 on the user's HMD. Also within that image are similar markers 54 at fxed positions in the work site. For example, in neurosurgery, the markers may be attached to the patient's head, or to structure which holds it in a fixed position. The camera has a zoom function 58, operable so that the markers 52, 54 are of adequate size in the image. The zoom setting of the camera is fed into the image processing function, 60 in the tracking computer 40, whereby the positions 62 of the user's head and the position 64 of the work site relative to the camera can be determined. Angular position is determined from the orientation of the patterns 52, 54, and their distance from the camera from the size of the patterns in the camera image (the smaller the pattern appears, the further away it is). The zoom function can be omitted if preferred, in order to avoid any inaccuracy in measuring the zoom setting.

The positions 66, 68 of the user's head and of the worksite relative to the origin or datum (0,0,0) of a fixed Cartesian (X,Y,Z) frame of reference are determined by adding the camera position and orientation 72 to the relative head and worksite positions 62, 64. It will be appreciated that by using the same camera to track both the head and worksite positions, errors in the camera location, orientation and zoom which would arise if separate cameras were used can be cancelled-out.

Knowledge of the positions of the user's head and the worksite enable the tracking, computer 40 to detect when, by how much and in which direction the user looks away from his primary field of view 24. Thus, when he looks in the direction in which an image 26 is located in virtual space, the tracking computer is enabled to cause the display computer 44 to display that image in an appropriate part of the user's overall field of view 74 as then oriented.

Figure 5 illustrates how the system may also be used to overlay a virtual image (for example an MRI-derived image) of an object onto a real-world image of that object using conformal symbology. The system brings together the tracking data domains 80 established as already described by the cameras 36, 38 and the tracking computer 40, with an external data domain 82 which is established using data from the existing hospital data sources 46. The system elements and functions used in the tracking domain 80 have already been described with reference to figures 3 and 4 bear the same reference numerals as in those figures.

The external data domain contains images and vector data defining virtual images 84 derived from three-dimensional scanning techniques such as MRI or CT. These data are processed to yield a spatial datum 86 with reference to which the images are defined. This datum is arranged to be the same as the datum 88 with reference to which the position of the image of the worksite in the tracking domain is defined.

Then, using the coordinate and orientation information from the external data domain, the tracking computer 40 derives the position of the virtual image of the object, first relative to the datum 88 and then relative to the position of the user's head. If the position of the virtual object is within the user's primary field of view, it can then be projected on to the helmet mounted display at the appropriate position, size and orientation.

Thus, when an object can be seen both in the main field of view and in the virtual image, the virtual image can be adjusted in size and positioned exactly over on the real-world image. Thereby, internal features of the object (e.g. part of a patient's anatomy) revealed in the MRI image can be seen by the surgeon superimposed on his real-world view of the object.

The invention also includes any novel feature or combination of features herein disclosed, whether or not specifically claimed.

## Claims

1. A method of presenting an image to a user of a head-mounted display comprising sensing when the user of the display looks in a predetermined direction away from his primary field of view (as herein defined), and presenting the image to the user via the display in response to said sensing at a virtual location spaced apart from the primary field of view.

2. The method of claim 1 comprising presenting the image as if it were at a fixed spatial position.

3. The method of claim 1 or claim 2 wherein said sensing comprises sensing movements of the user's head.

4. The method of claim 3 comprising sensing movements of the user's head by means of at least one camera.

5. The method of any preceding claim comprising using the display also to overlay a virtual image of an object on to image of said object in the users primary field of view.

6. The method of claim 2 or any claim dependent therefrom, wherein the user shares a common primary field of view with at least one other user of another said head-mounted display, the method comprising presenting a different said image to the other user, the different image being presented as if it were at a fixed spatial position which is different to the fixed spatial position of the first said image.

7. The method of any preceding claim where the primary field of view is a real-world view.

8. A display system comprising a head-mounted display which when worn by a user affords the user a view of the real world as a primary field of view (as herein defined), and means for presenting to the user via the head-mounted display an image which appears to the user to be spaced apart from the primary field of view in a fixed position relative thereto in real-world space.

9. A display system comprising a head-mounted display, means configured for sensing when a user of the display looks in a predetermined direction away from his primary field of view (as herein defined) and means responsive to the sensing means and configured for presenting an image to the user via the head-mounted display when the user looks in said direction, at a virtual location spaced apart from the primary field of view.

10. The system of claim 9 wherein the presenting means is configured to present the image as if it were at a fixed spatial position.

11. The system of claim 9 or claim 10 wherein the sensing means comprises means for sensing movements of the user's head.

12. The system of claim 11 wherein the sensing means comprises at least one camera directable at the user's head.

13. The system of any of claims 9 to 12, wherein the presenting means is configured also to present a virtual image of an object overlaid on an image of that object in the user's primary field of view.

14. The system of any of claims 9 to 13 comprising a plurality of said head-mounted displays, the sensing means being configured to determine when users of the displays look in respective predetermined directions, the presenting means being configured to present respective images to the users of the displays when they look in said respective directions.

15. The system of claim 14 when dependent from claim 10 wherein the presenting means is configured to present said respective images to said plurality of users as if the images were at respective different fixed spatial positions around a primary field of view common to said users.
